# EUROPEAN PATENT APPLICATION

(11) **EP 2 365 416 A1**
(43) Date of publication of application: **14.09.2011**
(21) Application number: 11151929.4
(22) Date of filing: 25.01.2011
(51) Int. Cl.: G06F 1/32, H04L 12/28, G06Q 10/00, G06Q 50/00

(54) **Method and apparatus for controlling operations of devices based on information about power consumption of the devices**

(30) Priority: 02.02.2010 US 300559 P; 18.03.2010 KR 20100024348
(71) Applicant: Samsung Electronics Co., Ltd., Suwon-si, Gyeonggi-do 506-762 (KR)
(72) Inventor: Park, Young-jin, Gyeonggi-do (KR); Park, Hyun-soo, Seoul (KR); Jang, Jae-hwi, Gyeonggi-do (KR); Shin, Jong-hyun, Gyeonggi-do (KR); Lee, Kyu-suk, Gyeonggi-do (KR)
(74) Representative: Grünecker, Kinkeldey, Stockmair & Schwanhäusser Anwaltssozietät

(57) **Abstract**

A method and apparatus for controlling operations of a controlled devices in a network including a control device and at least one controlled device are provided. The method includes: receiving information about a device usage history of a user for the at least one controlled device from the at least one controlled device; setting an optimum power consumption level corresponding to the controlled device from among a plurality of power consumption levels classified based on power consumption of the controlled device, based on the received information about the device usage history and information about time-based price; and controlling operations of the controlled device based on the set optimum power consumption level.

## Description

### CROSS-REFERENCE TO RELATED PATENT APPLICATIONS

This application claims the benefit of U.S. Provisional Application No. 61/300,559, filed on February 2, 2010 in the U.S. Patent and Trademark Office, and claims priority from Korean Patent Application No. 10-2010-0024348, filed on March 18, 2010 in the Korean Intellectual Property Office, the disclosures of which are incorporated herein in their entirety by reference.

### BACKGROUND

### 1. Field

Apparatuses and methods consistent with exemplary embodiments relate to controlling operations of devices, and more particularly, to controlling operations of devices based on information about power consumption of the devices.

### 2. Description of the Related Art

A smart grid is a new concept of a grid, in which information and communication technology is grafted onto a unidirectional energy supply system including power generation, power transmission/distribution, and sales so that real-time information can be bi-directionally exchanged between a power supplier and a consumer, thereby optimizing energy efficiency.

The smart grid uses a concept of demand response (DR) where the consumer uses power aside from his/her general consumption in response to a price, a monetary reward, or directions of a power generation company. Accordingly, the power supplier may induce or suppress electricity consumption during a desired time, and the customer may consume electricity at a low price.

In the related art, a control device that received information about a time-based price may turn on or off home appliances connected to the control device with or without wires in order to control power consumption in such a smart grid.

### SUMMARY

One or more exemplary embodiments provide a method and apparatus for controlling operations of devices based on information about power consumption of the devices.

According to an aspect of an exemplary embodiment, there is provided a method of controlling operations of a controlled device in a network including a control device and at least one controlled device, the method including: receiving information about a device usage history of a user for the at least one controlled device from the at least one controlled device; setting an optimum power consumption level corresponding to the controlled device from among a plurality of power consumption levels classified based on power consumption of the controlled device, based on the received information about the device usage history and information about time-based price; and controlling operations of the controlled device based on the set optimum power consumption level.

In the setting the optimum power consumption level, the optimum power consumption level may be set in such that a sum of momentary power consumption of the at least one controlled device is less than or equal to a threshold value, based on the received information about the time-based price and the information about the device usage history, and in the controlling the operations of the controlled device, operations of the at least one controlled device may be controlled in such a way that the sum of the momentary power consumption is decreased as power rates are relatively increased.

The method may further include generating schedule information about operating times of the controlled device based on the information about the time-based price, the received information about the device usage history, and the set optimum power consumption level, wherein, in the controlling the operations of the controlled device, the operations may be controlled based on the set optimum power consumption level and the generated schedule information.

The generating the schedule information may include: detecting a times when a power rate is less than or equal to a threshold value as a first candidate time, based on the information about the time-based price; detecting an estimated time when the user is expected to use the controlled device as a second candidate time, based on the received information about the device usage history; and generating the schedule information about the operating times of the at least one controlled device based on the detected first candidate time, the detected second candidate time, and the set optimum power consumption level.

The method may further include outputting the generated schedule information and information about power rates when the at least one controlled device operates according to the generated schedule information.

The method may further include receiving information about weather, wherein, in the controlling the operations of the controlled device, a controlled device for supporting a heating or a cooling operation from among the at least one controlled device may perform the heating or the cooling operation for a predetermined time before a hottest or a coldest peak time, based on the received information about weather and the set optimum power consumption level.

The method may further include: analyzing the received device usage history; generating trained information including at least one of preference of the user for the controlled device and information about a usage pattern of the user with respect to the controlled device, based on a result of the analysis; and storing the trained information.

The method may further include charging a battery provided for the controlled device or supplying power to the controlled device by using the battery, based on the generated trained information, the information about time-based price, and the set optimum power consumption level.

The method may further include: periodically checking whether a sum of momentary power consumption of the at least one controlled device is less than a threshold value; selectively receiving information about a current operation state from the controlled device, based on a result of the checking; resetting the optimum power consumption level based on the information about the current operation state, the received information about the device usage history, and the information about the time-based price; and controlling the operations of the controlled device based on the reset optimum power consumption level.

The method may further include: receiving user location information indicating a current location of the user; and outputting at least one of the information about the device usage history, the information about the time-based price, information about current power consumption of the at least one controlled device, and the set optimum power consumption level to a controlled device nearest to the current location of the user, or transmitting the at least one information to at least one of a portable device of the user and a personal computer (PC) of the user, based on the received user location information.

The method may further include: receiving user location information indicating a current location of the user; and blocking power supplied to at least controlled device installed at a location other than the current location of the user, based on the received user location information.

The method may further include: receiving at least one of information about weather, power consumption prediction information of a district where the network is located, and previous year power consumption information of the district; and generating power rate prediction information indicating a predicted value on future power rates, by using the received at least one information and the information about the time-based price, wherein, the setting the optimum power consumption level may include setting the optimum power consumption level based on the generated power rate prediction information and the received information about the device usage history.

According to an aspect of another exemplary embodiment, there is provided an apparatus for controlling operations of a controlled device in a network including the at least one controlled device, the apparatus including: a receiver which receives information about a device usage history of a user for the at least one controlled device from the at least one controlled device; a power consumption level setter which sets an optimum power consumption level corresponding to the controlled device from among a plurality of power consumption levels classified based on power consumption of the controlled device, based on the received information about the device usage history and information about time-based price; and an operation controller which controls operations of the controlled device based on the set optimum power consumption level.

The apparatus may further include a schedule information generator which generates schedule information about operating times of the at least one controlled device based on the information about the time-based price, the received information about the device usage history, and the set optimum power consumption level, wherein the operation controller may control operations of the at least one controlled device based on the set optimum power consumption level and the schedule information.

The apparatus may further include an output unit which outputs the generated schedule information and information about power rates when the controlled device operates according to the generated schedule information.

The apparatus may further include a training unit which analyzes the device usage history, generates trained information including at least one of preference of the user for the controlled device and information about a usage pattern of the user with respect to the controlled device, based on a result of the analysis, and storing the generated trained information.

The apparatus may further include a power consumption checker which periodically checks whether a sum of momentary power consumption of the at least one controlled devices is less than a threshold value, wherein the receiver may selectively receive information about a current operation state from the controlled device, based on a result of the checking, the power consumption level setter may reset the optimum power consumption level based on the received information about the current operation state, the received information about the device usage history, and the information about the time-based price, and the operation controller may control the operations of the controlled device based on the reset optimum power consumption level.

The apparatus may further include a battery manager which charges a battery provided for the controlled device or supplies power to the controlled device by using the battery, based on the generated trained information, the information about time-based price, and the set optimum power consumption level.

The apparatus may further include a transmitter which transmits at least one of the information about the device usage history, the information about the time-based price, information about current power consumption of the controlled device, and the set optimum power consumption level to at least one of a portable device of the user and a personal computer (PC) of the user, based on user location information, when the receiver receives the user location information indicating a current location of the user.

The apparatus may further include a power rate predictor which, when the receiver receives at least one of information about weather, power consumption prediction information of a district where the network is located, and previous year power consumption information of the district, generates power rate prediction information indicating a predicted value on future power rates, by using the received at least one information and the information about the time-based price, wherein the power consumption level setter may set the optimum power consumption level based on the power rate prediction information and the information about the device usage history.

According to an aspect of another exemplary embodiment, there is provided a computer readable recording medium having recorded thereon a program for executing a method of controlling operations of a controlled device in a network including a control device and at least one controlled device, the method including: receiving information about a device usage history of a user for the at least one controlled device from the at least one controlled device; setting an optimum power consumption level corresponding to the controlled device from among a plurality of power consumption levels classified based on power consumption of the controlled device, based on the received information about the device usage history and information about time-based price; and controlling operations of the controlled device based on the set optimum power consumption level.

According to an aspect of another exemplary embodiment, there is provided a method of controlling operations of a controlled device in a network including a control device and at least one controlled device, the method including: transmitting, from the controlled device to the control device, information about a device usage history of a user for the controlled device among the at least one controlled device; and controlling operations of the controlled device based on a set optimum power consumption level from among a plurality of power consumption levels classified based on power consumption of the controlled device, set by the control device based on the transmitted information about the device usage history and information about time-based price.

### BRIEF DESCRIPTION OF THE DRAWINGS

The above and/or other aspects will become more apparent by describing in detail exemplary embodiments with reference to the attached drawings in which:

FIG. 1 is a flowchart illustrating a method of controlling operations of controlled devices included in a network, wherein the method is performed by a control device, according to an exemplary embodiment;

FIG. 2 is a flowchart illustrating a method of generating schedule information, wherein the method is performed by a control device, according to an exemplary embodiment;

FIG. 3 is a flowchart illustrating a method of generating trained information, wherein the method is performed by a control device, according to an exemplary embodiment;

FIG. 4 is a flowchart illustrating a method of resetting an optimum power consumption level for each controlled device, wherein the method is performed by a control device, according to an exemplary embodiment;

FIG. 5 is a block diagram of an apparatus for controlling operations of controlled devices, according to an exemplary embodiment; and

FIG. 6 is a block diagram of an apparatus for controlling operations of controlled devices, according to another exemplary embodiment.

### DETAILED DESCRIPTION OF EXEMPLARY EMBODIMENTS

Hereinafter, exemplary embodiments will be described more fully with reference to the accompanying drawings. Expressions such as "at least one of," when preceding a list of elements, modify the entire list of elements and do not modify the individual elements of the list.

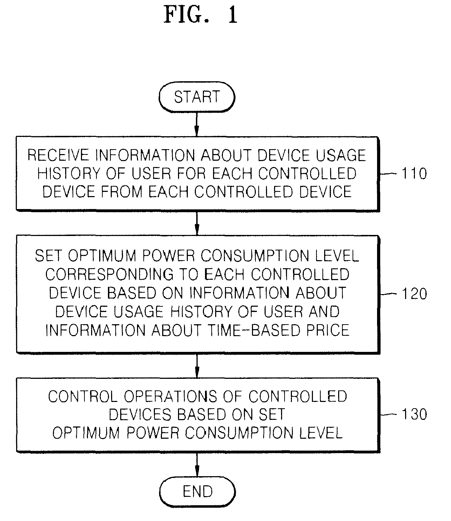

FIG. 1 is a flowchart illustrating a method of controlling operations of controlled devices included in a network, wherein the method is performed by a control device, according to an exemplary embodiment.

Referring to FIG. 1, in operation 110, information about a device usage history of a user for each controlled device is received from each controlled device.

Here, the information about the device usage history may include a time of using each controlled device, operations performed by each controlled device, a power consumption level notified from a control device to each controlled device, and a set-up power consumption level when each controlled device performs an operation. The information about the device usage history may be periodically received.

The controlled device according to an exemplary embodiment denotes a device that is capable of bidirectional communication with the control device with or without wires, and is configured to limit a permitted operation according to a power consumption level.

Examples of the controlled device include a washing machine, an air conditioner, a refrigerator, a lamp, a hair dryer, a mobile phone charger, a computer, a laptop, etc., which are all devices capable of communicating with a control device.

Because the controlled device is capable of bidirectional communication with the control device in order for the control device to control an operation of the controlled device by using a smart grid, the controlled device is able to notify actual power consumption to the control device and the control device is able to notify a power consumption level corresponding to the controlled device.

Here, the controlled device may directly measure its own actual power consumption, and transmit information about the measured actual power consumption to the control device. Alternatively, if for example the controlled device does not have an operation of measuring its own actual power consumption, a power consumption measuring unit to measure power consumption may be connected to the controlled device, the actual power consumption may be measured by the power consumption measuring unit, and the information about the measured actual power consumption may be transmitted to the control device. The control device may gather information received from the controlled devices about the power consumption, and then calculate information about power consumption according to at least one of a type of the controlled devices, time-based power consumption, and power consumption according to each room at home.

The control device may transmit the information received from each controlled device about the power consumption to a power generation company, and may communicate with an external portable device, an external personal computer (PC), or the like.

The control device is a device that is capable of bidirectional communication with the controlled devices, and has an ability to control the controlled devices. Examples of the control device include a Wallpad, a set-top box, a computer, a laptop, etc., which are all devices that are capable of bidirectional communication with controlled devices and have an ability to control the controlled devices.

The control device may transmit information about a current time to the controlled devices by using the bidirectional communication.

Here, a network including the control device and the controlled device may be a wired network such as a pipe line communication (PLC) network, or a wireless network such as a Bluetooth network, a Wi-Fi network, a ZigBee network, etc.

In operation 120, an optimum power consumption level corresponding to each controlled device from among a plurality of power consumption levels classified based on power consumption of each controlled device is set based on the information about the device usage history and information about time-based price.

Here, the optimum power consumption level is a value for setting an upper limit of power consumption permitted for each controlled device according to the information about the time-based price and the information about the device usage history. Different optimum power consumption levels may be set for each controlled device.

For example, when it is assumed that a power consumption level of a controlled device is classified into 1 through 4 and the power consumption levels 1 through 4 respectively have power consumptions of 1.13 kWh, 0.14 kWh, 0.11 kWh, and 0.019 kWh, if the optimum power consumption level is set to be a consumption level 2, the controlled device in the power consumption level 2 may perform an operation to consume power less than or equal to 0.14 kWh. For example, when the controlled device is a washing machine, the controlled device may be controlled to perform only three operations having relatively low power consumption, such as a washing operation, a rinsing operation, and a spin-drying operation, and not to perform an operation having relatively high power consumption, such as a drying operation, from 2 PM to 4 PM when power rates are high according to the information about the time-based price. According to another exemplary embodiment, there may be a power consumption level corresponding to 0 kWh, which is power consumption when the controlled device is turned off.

Here, the optimum power consumption level for each controlled device may be set in such a way that a sum of momentary power consumption of the controlled devices is less than or equal to a threshold value, based on the information about the time-based price and the information about the device usage history. The threshold value for the sum of the momentary power consumption may be determined based on the maximum momentary power consumption that is permitted at the home of the user at a current point of time.

For example, if the maximum momentary power consumption permitted at home from 2 PM to 4 PM is 400 kWh, the threshold value may be set to be less than or equal to 500 kWh and the control device may set the optimum power consumption level of each controlled device in such a way that the sum of the momentary power consumption of the controlled devices from 2 PM to 4 PM is less than or equal to the threshold value.

Here, the information about the time-based price is information indicating, if power rates are differently fixed according to time, the time bands applied with different power rates and the power rates corresponding to the time bands. The information about the time-based price may be externally received periodically, and may be directly input to the control device by the user. The information about the time-based price may be shown in a continuous graph or discretely.

In the current exemplary embodiment, the information about the device usage history is considered while setting the optimum power consumption level to consider user convenience when the control device controls the operations of the controlled devices.

For example, based on the information about the device usage history, if the user adjusted the temperature at home to be 23°C from 7 PM to 8 PM by using a heater for the last few months, the optimum power consumption level corresponding to the power consumption used to adjust the temperature to be 23°C may be set in the heater while setting the optimum power consumption level for each controlled device from 7 PM to 8 PM. Here, the control device may control the heater by notifying the optimum power consumption level to the heater, or the heater may control itself to perform a heating operation of adjusting the temperature to be 23°C.

Also, based on the information about the device usage history, if the user watched a television (TV) from 9 PM to 10 PM every day, the control device may set the optimum power consumption level in such a way that the TV may be powered on between 9 PM and 10 PM.

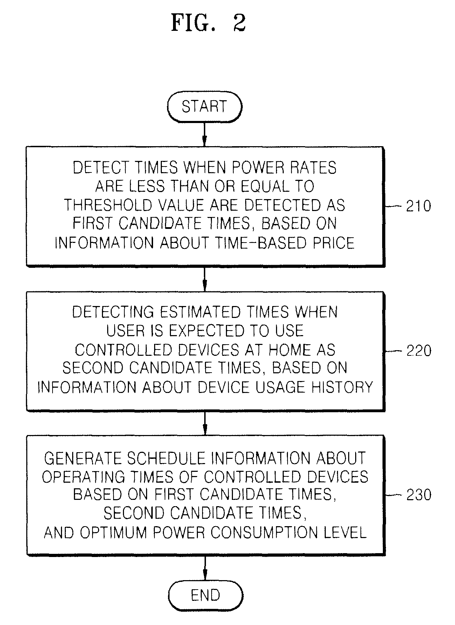

According to another exemplary embodiment, when the optimum power consumption level is set as such, the control device may generate schedule information about operating times of the controlled devices based on the set optimum power consumption level, the information about the time-based price, and the information about the device usage history, and control the operations of the controlled devices based on the schedule information. A method of generating the schedule information will be described below with reference to FIG. 2.

According to another exemplary embodiment, the control device may generate power rate prediction information about a predicted value of a future power rate, and set the optimum power consumption level based on the generated power rate prediction information.

For example, when the control device receives at least one of information about weather, power consumption prediction information of a district where the network is located, previous year power consumption information of the district, etc., the power rate prediction information may be generated based on such information received by the control device and the information about the time-based price. In this case, the power rate prediction information is used when the control device generates long-term schedule information.

The information about weather, information about public holidays, etc., may be further considered when the optimum power consumption level is set.

In operation 130, the operations of the controlled devices are controlled based on the set optimum power consumption level.

Here, the operations of the controlled devices may be controlled in such a way that the sum of the momentary power consumption of the controlled devices is decreased as the power rates are relatively increased. For example, the control device notifies the optimum power consumption level to each controlled device to consume less power as the power rates are relatively increased.

Alternatively, the control device may set a maximum power rate, i.e., a maximum value of the power rate that is desired to be consumed by the controlled devices during a predetermined time, and then control the operations of the controlled devices in such a way that the entire power consumption of the controlled devices during the predetermined time does not exceed the maximum power rate.

For example, the control device may set the maximum power rate to be $300 if the user wants to pay only $300 as power rates for one month. Here, the predetermined time is not limited to one month, e.g., the maximum power rate may be set in units of one day or one year.

If the control device generated the schedule information about the operating times of the controlled devices, the control device may control the operations of the controlled devices according to the optimum power consumption level set for each control device, and the schedule information.

As such, according to an exemplary embodiment, the power consumption of the controlled devices is more effectively controlled compared to a related art technology of controlling power consumption, by controlling the operations of the controlled devices by turning on of off the controlled devices based on the optimum power consumption level set for each controlled device.

The information about the device usage history is also considered while setting the optimum power consumption level, and thus the control device controls the power consumption of the controlled devices while considering user convenience.

According to another exemplary embodiment, the control device may control the operations of the controlled devices by using user location information of the user at home.

For example, if the control device receives the user location information indicating a current location of the user at home through a detecting sensor installed at the home of the user, the control device may control the controlled device located nearest to the current location of the user to output at least one of the information about the device usage history, the information about the time-based price, information about current power consumption of each controlled device, and information about an optimum power consumption level currently set for each controlled device, based on the user location information. If it is determined that the user is not at home, the control device may transmit such information to a portable device of the user or a personal computer (PC) of the user.

Also, the control device may block power supplied to some of the controlled devices installed at a location other than the current location of the user at home, based on the user location information.

For example, if the TV in a living room is turned on but the user is not there, power supplied to the TV may be blocked. Also, if illumination sensors for detecting illumination at home are installed, information about illumination of each location at home may be received from the illumination sensors, and power supplied to turned on lamps located where the user is not located may be blocked. Here, sensors installed at home may receive power by using an energy scavenge method, wherein power is received by converting at least one of light energy, temperature energy, pressure, and vibration energy around the sensors into electric energy. Also, the sensors may form a ubiquitous sensor network.

Meanwhile, the control device according to an exemplary embodiment may further perform additional operations, such as at least one of trespassing surveillance, fire detection, gas leakage detection, etc., aside from an operation of controlling the operations of the controlled devices.

A method of generating the schedule information about the operating times of the controlled devices according to an exemplary embodiment will now be described with reference to FIG. 2

FIG. 2 is a flowchart illustrating the method of generating the schedule information, wherein the method is performed by the control device, according to an exemplary embodiment.

Referring to FIG. 2, in operation 210, times when power rates are less than or equal to a threshold value are detected as first candidate times based on the information about the time-based price.

For example, if the power rates are relatively high during 2 PM to 4 PM, relatively low during 2 AM to 4 AM, and the same during the remaining hours based on the information about the time-based price, the times excluding 2 PM to 4 PM from among 24 hours may be the first candidate times.

In operation 220, estimated times when the user is expected to use the controlled devices at home are detected as second candidate times, based on the information about the device usage history.

For example, based on the information about the device usage history received from each controlled device, excluding a controlled device like a refrigerator that is operated all the time, if the user uses the controlled devices from 7 AM to 8 AM and from 7 PM to 11 PM during weekdays, 7 AM to 8 AM and 7 PM to 11 PM may be detected as the second candidate times. In other words, times excluding 7 AM to 8 AM and 7 PM to 11 PM from among 24 hours may be determined to be times when the controlled devices are not used since the user is not at home or is sleeping at home.

In operation 230, the schedule information about the operating times of the controlled devices is generated based on the first candidate times, the second candidate times, and the set optimum power consumption level.

For example, if the first candidate times are times excluding 2 PM to 4 PM, and the second candidate times are times 7 AM to 8 AM and 7 PM to 11 PM, the schedule information may be generated in such a way that the controlled devices, which are to be operated when the user is at home, such as the TV, is operated during the second candidate times, i.e., 7 AM to 8 AM and 7 PM to 11 PM.

Also, with respect to the controlled devices, which are not operated when the user is not at home, like an electric rice cooker, the schedule information may be generated in such a way that the electric rice cooker is operated during the first candidate times, when the power rates are relatively low, excluding the second candidate times, when the user is expected to use the controlled devices, in detail, during times excluding 2 PM to 4 PM while avoiding 7 AM to 8 AM and 7 PM to 11 PM.

According to another exemplary embodiment, if a current time is determined to be the second candidate time after the control device generated the schedule information, the generated schedule information and the information about the power rates when the controlled devices are operating according to the schedule information may be output to be notified to the user. The user may determine whether to operate the controlled devices according to the generated schedule information by using the output schedule information.

According to another exemplary embodiment, the control device may use the information about the weather while generating the schedule information. For example, when the control device receives the information about the weather, the control device may generate the schedule information in such a way that a controlled device for supporting a heating or cooling operation from among the controlled devices performs the heating or cooling operation for a predetermined time before a hottest or coldest peak time, and may control the operations of the controlled devices according to the schedule information.

Meanwhile, the control device according to an exemplary embodiment may learn a usage pattern of the user based on the information about the device usage history, and use the learnt usage pattern while determining the optimum power consumption level of each controlled device.

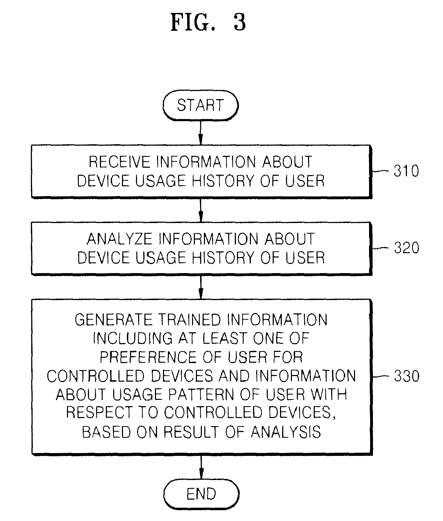

A method of generating trained information including the usage pattern according to an exemplary embodiment will now be described with reference to FIG. 3.

FIG. 3 is a flowchart illustrating the method of generating the trained information, wherein the method is performed by the control device, according to an exemplary embodiment.

Referring to FIG. 3, the information about the device usage history of the user is received from each controlled device, in operation 310.

The information about the device usage history is analyzed in operation 320.

In operation 330, the trained information including at least one of preference of the user for the controlled devices and information about the usage pattern of the user with respect to the controlled devices is generated based on the result of analysis.

For example, if the user uses a TV more than an audio player, the trained information indicating that preference for the TV is higher than preference for the audio player may be generated.

Also, if the control device has set the optimum power consumption level of a TV to be a low power consumption level so as to reduce power consumption of the TV, and the user used the TV as it is set up, whereas if the control device has set the optimum power consumption level of an air conditioner to be a low power consumption level and controlled the air conditioner to operate at a high cooling temperature, but the user decreased the cooling temperature, the trained information may be generated according to such a usage pattern. The generated trained information may be stored in the control device, and when the optimum power consumption level is set for the air conditioner at a later time, the control device may set a higher power consumption level for the air conditioner based on the stored trained information. Accordingly, the air conditioner may perform a cooling operation at a lower cooling temperature. Here, the control device may directly control operations of the air conditioner in such a way that the air conditioner performs the cooling operation at a certain temperature.

According to another exemplary embodiment, a battery installed at home may be charged while the controlled devices perform operations, or the battery may supply power to the controlled devices.

For example, if the power rates are low at dawn, the battery may be charged at dawn. Alternatively, if the user wants to use the air conditioner from 1 PM to 3 PM, but the power rates are high from 2 PM to 4 PM, the air conditioner may be operated by using an external power source from 1 PM to 2 PM, and by using the battery at home from 2 PM to 3 PM.

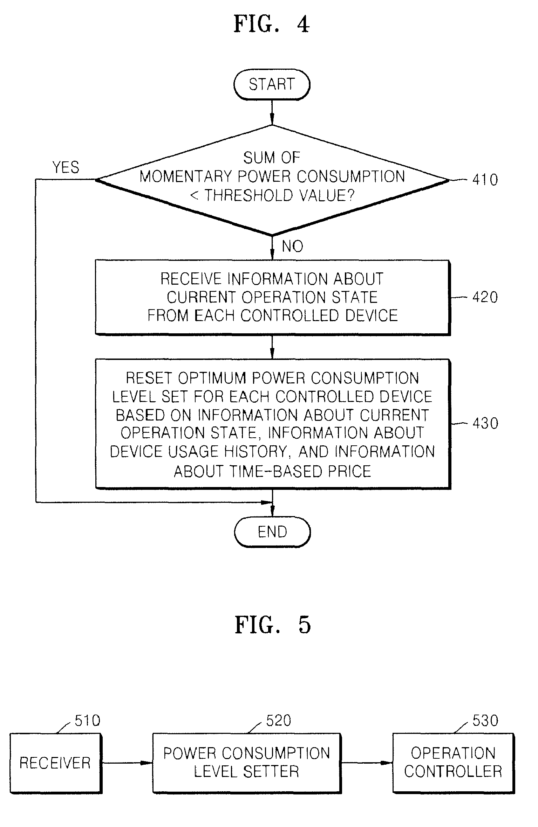

According to another exemplary embodiment, if a certain situation occurs while the controlled devices are performing operations, the optimum power consumption level set for each controlled device may be reset. For example, if the sum of the momentary power consumption of each controlled device reaches a threshold value, the control device may reset the optimum power consumption level of each controlled device so that the sum does not exceed the threshold value. A method of resetting the optimum power consumption level for each controlled device according to an exemplary embodiment will now be described with reference to FIG. 4.

FIG. 4 is a flowchart illustrating the method of resetting the optimum power consumption level for each of the controlled devices, wherein the method is performed by the control device, according to an exemplary embodiment.

Referring to FIG. 4, in operation 410, it is periodically checked whether the sum of the momentary power consumption of the controlled devices is less than the threshold value.

If the sum is less than the threshold value, the control device does not change the optimum power consumption level currently set for each controlled device.

In operation 420, if it is determined that the sum reaches the threshold value, information about a current operation state is received from each controlled device.

Here, the information about the current operation state shows at least one of whether a controlled device is currently operating, which operation is being performed, and whether an error has occurred.

In operation 430, the optimum power consumption level set for each controlled device is reset based on at least one of the information about the current operation state, the information about the device usage history, and the information about the time-based price.

For example, a higher optimum power consumption level may be set for a controlled device currently operating than for a controlled device that is not currently operating, based on the information about the current operation state.

Also, a higher optimum power consumption level may be set for a controlled device currently performing an operation that may cause a problem when the operation is stopped than a controlled device currently performing an operation that does not cause a problem when the operation is stopped.

As such, when the optimum power consumption level is reset, the control device controls the operations of each controlled device based on the reset optimum power consumption level of each controlled device.

For example, when optimum power consumption levels of an air conditioner and a washing machine are to be reset while the air conditioner is performing a cooling operation and the washing machine is performing a rinsing operation, the control device may increase a cooling temperature of the air conditioner or turn off the air conditioner, and allow the washing machine to perform the rinsing operation. According to another exemplary embodiment, if the washing machine is performing a water feeding operation, the temperature of the water being fed to the washing machine may be set to be lower than a previously set temperature so as to decrease the optimum power consumption level of the washing machine.

As such, the control device periodically resets the optimum power consumption level for each controlled device so that the sum of the momentary power consumption of the controlled devices does not exceed the threshold value.

According to another exemplary embodiment, the trained information may be further used while resetting the optimum power consumption levels.

FIG. 5 is a block diagram of an apparatus for controlling operations of controlled devices, according to an exemplary embodiment.

Referring to FIG. 5, the apparatus includes a receiver 510, a power consumption level setter 520, and an operation controller 530. Here, the apparatus may correspond to the control device described above. Alternatively, the apparatus may be included in the control device.

The receiver 510 receives information about device usage history of a user for each controlled device, from each controlled device.

The power consumption level setter 520 sets an optimum power consumption level corresponding to each controlled device from among a plurality of power consumption levels classified based on power consumption of each controlled device, based on the information about the device usage history and information about time-based price.

The operation controller 530 controls operations of the controlled devices based on the set optimum power consumption level.

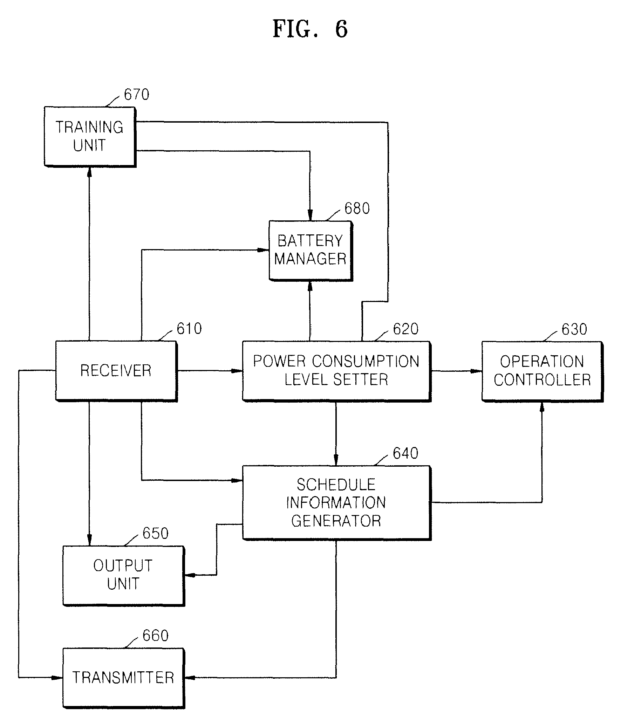

FIG. 6 is a block diagram of an apparatus for controlling operations of controlled devices, according to another exemplary embodiment.

Referring to FIG. 6, the apparatus includes a receiver 610, a power consumption level setter 620, an operation controller 630, a schedule information generator 640, an output unit 650, a transmitter 660, a training unit 670, and a battery manager 680.

Since the receiver 610, the power consumption level setter 620, and the operation controller 630 of FIG. 6 are similar to the receiver 510, the power consumption level setter 520, and the operation controller 530 of FIG. 5, details thereof are not repeated herein.

The schedule information generator 640 generates schedule information about operating times of controlled devices based on information about a time-based price, information about a device usage history of a user, and an optimum power consumption level set for each controlled device. Here, the schedule information generator 640 may further generate information about power rates when the controlled devices operate according to the generated schedule information.

The output unit 650 outputs the generated schedule information and information about power rates corresponding to the schedule information. Also, the output unit 650 may output information about power consumption according to at least one of a type of the controlled devices, time-based power consumption, power consumption according to each room at home, etc. Here, such information may be output in a graphical user interface using at least one of a bar graph, a pie chart, a line graph, etc.

When the receiver 610 receives user location information, the transmitter 660 transmits the information about the device usage history, the information about the time-based price, information about current power consumption of each controlled device, and information about optimum power consumption level set for each controlled device to at least one of a portable device of the user, a PC of the user, etc., based on the user location information.

The operation controller 630 may control the transmitter 660 to transmit the information about the user location information, the information about the device usage history, the information about the time-based price, the information about the current power consumption, and the information about the optimum power consumption level to a controlled device nearest to a current location of the user, based on the user location information. Alternatively, the operation controller 630 may block power supplied to some of the controlled devices located at a location other than a current location of the user at home, based on the user location information.

The training unit 670 analyzes the information about the device usage history, and generates trained information including at least one of preferences of the user for the controlled devices and information about a usage pattern of the user with respect to the controlled devices, based on the result of the analysis.

The battery manager 680 charges a battery installed at the home of the user or supplies power to the controlled devices by using the battery, based on the trained information, the information about the time-based price, and the optimum power consumption level.

The apparatus according to an exemplary embodiment may further include a power consumption checker (not shown) to periodically check whether a sum of momentary power consumption of the controlled devices is less than a threshold value. In this case, the receiver 610 selectively receives information about a current operation state from each controlled device, based on the result of the checking, and the power consumption level setter 620 resets the optimum power consumption level based on the information about the current operation state, the information about the device usage history, and the information about the time-based price.

The apparatus according to another exemplary embodiment may further include a power rate predictor (not shown) to, when the receiver 610 receives at least one information about weather, power consumption prediction information of a district where a network is located, and previous year power consumption information of the district, generate power rate prediction information indicating a predicted value on future power rates, by using the received information and the information about the time-based price.

Here, the power consumption level setter 620 may set the optimum power consumption level based on the power rate prediction information and the information about the device usage history.

Exemplary embodiments can be written as computer programs that are executed by a processor or a general-use digital computer and stored in a computer readable recording medium.

Examples of the computer readable recording medium include magnetic storage media (e.g., ROM, floppy disks, hard disks, etc.), and optical recording media (e.g., CD-ROMs, or DVDs). Moreover, one or more units of the control device or the controlled device can include a processor or microprocessor executing a computer program stored in a computer-readable medium.

While exemplary embodiments have been particularly shown and described above, it will be understood by those of ordinary skill in the art that various changes in form and details may be made therein without departing from the spirit and scope of the present inventive concept as defined by the following claims.

## Claims

1. A method of controlling operations of a controlled device in a network comprising a control device and at least one controlled device, the method comprising:
receiving information about a device usage history of a user for the at least one controlled device from the at least one controlled device;
setting an optimum power consumption level corresponding to the controlled device from among a plurality of power consumption levels classified based on power consumption of the controlled device, based on the received information about the device usage history and information about time-based price; and
controlling operations of the controlled device based on the set optimum power consumption level.

2. The method of claim 1, wherein the setting the optimum power consumption level comprises setting the optimum power consumption level so that a sum of momentary power consumption of the at least one controlled device is less than or equal to a threshold value, based on the information about the time-based price and the received information about the device usage history, and
the controlling the operations of the controlled device comprises controlling operations of the at least one controlled devices so that the sum of the momentary power consumption is decreased as power rates are relatively increased.

3. The method of claim 1, further comprising:
generating schedule information about operating times of the at least one controlled device based on the information about the time-based price, the received information about the device usage history, and the set optimum power consumption level,
wherein the controlling the operations of the controlled device comprises controlling the operations of the controlled device based on the set optimum power consumption level and the generated schedule information.

4. The method of claim 3, wherein the generating the schedule information comprises:
detecting a time when a power rate is less than or equal to a threshold value as a first candidate time, based on the information about the time-based price;
detecting an estimated time when the user is expected to use the controlled device as a second candidate time, based on the received information about the device usage history; and
generating the schedule information about the operating times of the at least one controlled device based on the detected first candidate time, the detected second candidate time, and the set optimum power consumption level.

5. The method of claim 1, further comprising:
analyzing the received device usage history;
generating trained information comprising at least one of preference of the user for the controlled device and information about a usage pattern of the user with respect to the controlled device, based on a result of the analyzing; and storing the trained information.

6. The method of claim 1, further comprising:
periodically checking whether a sum of momentary power consumption of the at least one controlled device is less than a threshold value;
selectively receiving information about a current operation state from the at least one controlled device, based on a result of the periodical checking;
resetting the optimum power consumption level based on the received information about the current operation state, the received information about the device usage history, and the information about the time-based price; and
controlling the operations of the controlled device based on the reset optimum power consumption level.

7. An apparatus for controlling operations of a controlled device in a network comprising at least one controlled device, the apparatus comprising:
a receiver which receives information about a device usage history of a user the at least one controlled device from the at least one controlled device;
a power consumption level setter which sets an optimum power consumption level corresponding to the controlled device from among a plurality of power consumption levels classified based on power consumption of the controlled device, based on the information about the device usage history and information about time-based price; and
an operation controller which controls operations of the controlled device based on the set optimum power consumption level.

8. The apparatus of claim 7, wherein:
the power consumption level setter sets the optimum power consumption level so that a sum of momentary power consumption of the at least one controlled device is less than or equal to a threshold value, based on the information about the time-based price and the received information about the device usage history, and
the operation controller controls operations of the controlled device so that the sum of the momentary power consumption is decreased as power rates are relatively increased.

9. The apparatus of claim 7, further comprising:
a schedule information generator which generates schedule information about operating times of the at least one controlled device based on the information about the time-based price, the received information about the device usage history, and the set optimum power consumption level,
wherein the operation controller controls the operations of the controlled device based on the set optimum power consumption level and the generated schedule information.

10. The apparatus of claim 9, wherein the schedule information generator detects a time when a power rate is less than or equal to a threshold value as a first candidate time, based on the information about the time-based price, detects an estimated time when the user is expected to use the controlled device as a second candidate time, based on the information about the device usage history, and generates the schedule information about the operating times of the at least one controlled device, based on the detected first candidate time, the detected second candidate time, and the set optimum power consumption level.

11. The apparatus of claim 7, further comprising a training unit which analyzes the device usage history, generates trained information comprising at least one of preference of the user for the controlled device and information about a usage pattern of the user with respect to the controlled device, based on a result of the analyzing, and stores the trained information.

12. The apparatus of claim 7, further comprising:
a power consumption checker which periodically checks whether a sum of momentary power consumption of the at least one controlled device is less than a threshold value,
wherein the receiver selectively receives information about a current operation state from the at least one controlled device, based on a result of the periodical checking,
the power consumption level setter resets the optimum power consumption level based on the received information about the current operation state, the received information about the device usage history, and the information about the time-based price, and
the operation controller controls the operations of the controlled device based on the reset optimum power consumption level.

13. The apparatus of claim 7, further comprising:
a power rate predictor which, when the receiver receives at least one of information about weather, power consumption prediction information of a district where the network is located, and previous year power consumption information of the district, generates power rate prediction information indicating a predicted value on future power rates, by using the received at least one information and the information about the time-based price,
wherein the power consumption level setter sets the optimum power consumption level based on the generated power rate prediction information and the received information about the device usage history.

14. The apparatus of claim 7, wherein the receiver receives, from the controlled device, information about actual power consumption of the controlled device which is directly measured by the controlled device or measured through a power consumption measuring unit connected to the controlled device to measure power consumed in the controlled device.

15. A computer readable recording medium having recorded thereon a program for executing the method of claim 1.
